# EUROPEAN PATENT SPECIFICATION

(11) **EP 3 257 111 B1**
(45) Date of publication and mention of the grant of the patent: **31.03.2021**
(21) Application number: 15749431.1
(22) Date of filing: 12.02.2015
(51) Int. Cl.: H01R 25/00, H02G 3/12, H02G 3/14, H01R 24/78

(54) **RETRACTABLE RECESSED ELECTRICAL OUTLET AND DATA PORT ASSEMBLY**
EINZIEHBARE EINGELASSENE ELEKTRISCHE STECKDOSE UND DATENPORTANORDNUNG
SORTIE ÉLECTRIQUE RENFONCÉE RÉTRACTABLE ET ENSEMBLE PORT DE DONNÉES

(43) Date of publication of application: 20.12.2017
(73) Proprietor: Forti, Eric, Boynton Beach, Florida 33436 (US); Nimmagadda, Ramesh Babu, Boca Raton, Florida 33486 (US)
(72) Inventor: Forti, Eric, Boynton Beach, Florida 33436 (US); Nimmagadda, Ramesh Babu, Boca Raton, Florida 33486 (US)
(74) Representative: Lorente Berges, Ana
(86) International application number: PCT/US2015/015682
(87) International publication number: WO 2015/123450

(56) References cited:
- WO-A1-2004/019457
- CN-A- 102 832 481
- CN-U- 202 872 051
- CN-U- 203 056 216
- US-A1- 2010 124 849
- US-A1- 2013 122 726
- US-A1- 2013 344 721

## Description

### CROSS-REFERENCE TO RELATED APPLICATIONS

This application is based on and claims priority of U.S. Provisional Application Ser. No. 61940383 filed February 15, 2014

### BACKGROUND OF THE INVENTION

### FIELD OF THE INVENTION

The invention relates to a retractable electrical outlet assembly that fits into standard electrical outlet box which electrical outlet assembly comprises electrical outlet sockets available for use in the closed position and opens to expose additional electrical outlet sockets for use in the open position.

### DESCRIPTION OF RELATED ART

In today's environment, more and more electronic devices and appliances are in use which require electrical outlets and data ports for providing power to, and recharging, such devices. Standard electrical outlets are most commonly found in duplex and quadraplex configurations which limits the number of devices or appliances that can be plugged in at any one time. Changing an existing electrical outlet into an outlet with additional sockets is expensive and requires installation of a larger outlet box, changes to the wall and electrical wiring. In many instances, there may not be room in the wall to accommodate the larger outlet box.

The problem with limited outlet sockets has been overcome in the past by power strips or multi-outlet converters with multiple sockets that plug into an existing outlet. These outlet strips and converters are cumbersome with the power strips hanging from a cord and the converters protruding out from the outlet. Therefore, it is desirable to provide an electrical outlet and data port assembly that provides additional outlets while still fitting into existing standard electrical boxes. More particularly, it is desirable to provide an electrical outlet and data port assembly that has outlets and data ports in the closed position and opens to expose additional electrical outlet sockets and data ports in the open position.

There have been a number of recessing telescoping electrical receptacle assemblies disclosed which when in the service position the electrical outlet sockets are exposed and when in the closed position a closure plate is flush with the building member to which the assembly is attached. U.S. 2,811,574 issued Oct. 29, 1957 to Guerrero, U.S. 2,811,575 issued Oct. 29, 1957 to Guerrero, U.S. 3,433,886 issued March 18, 1969 to Myers and U.S. 3,794,956 issued Feb. 26, 1974 to Dubreuil each describe a telescoping receptacle assembly with a seal to prevent the introduction of fluids.

US Patent 6,127,630 issued October 3, 2000 to McKenzie, describes a recessible electrical receptacle with an open-ended housing mounted to a building member with a hinged closure pivotable from a service position to a recessed position flush with the building member. The socket of the electrical receptacle is only accessible in the open or service position.

A number of patents and published applications have been directed at providing recessible power outlets and data ports mounted to work surfaces. U.S. 4,551,577 issued Nov. 5, 1987 to Byrne describes a retractable power center which includes a rectangular housing formed in a work surface with a clamping arrangement to secure the housing to the work surface. The power outlets are arranged inside the rectangular housing. U.S. 5,231,562 issued July 27, 1993 to Pierce describes a desktop wire management system with outlet receptacles mounted on a module cover mounted over the receptacles in a removable storage compartment. U.S. 2008/0200050 A1 published Aug. 21, 2008 describes an expandable power and data distribution center capable of pivoting between open and closed positions with the sockets exposed when in the open position

Document WO 2004/019457 discloses a multiple socket comprising a displaceable panel which varies the number of sockets available to the user depending on its position. In particular, a particular embodiment shown in Figs. 13 and 14 of document WO 2004/019457 discloses a multiple socket where a rotatable multi-socket connector can be extracted from within a housing.

None of the above references, taken alone or in combination, are seen as teaching or suggesting the presently claimed retractable electrical and data port outlet assembly which assembly has sockets accessible for operative use in the closed position and provides additional sockets for operative use in the open positions.

### BRIEF SUMMARY OF THE INVENTION

The present invention overcomes the above limitation of the above inventions by providing a recessed retractable electrical receptacle assembly which is adapted to be installed into a standard electrical box and to be substantially flush to a mounting surface into which the electrical box is mounted. The invention may be mounted into a wall, floor, countertop or work surface. The invention can be installed as part of new electrical service or can replace an existing outlet by wiring into an existing electrical box. The invention includes at least one operative socket in the closed position and at least one additional operative socket in the open position.

A socket as used herein means the female receptacle or jack end of any type of connector having at least one hole including but not limited to electrical socket, electrical outlet, coaxial, or any type of data or communication ports or any other connection in which a plug end is inserted into a receptacle to complete an electrical, data or communication connection. It is understood that any opening into which an electrical appliance, data or communication device can be connected is a socket and the use of the term as used herein shall not be considered limiting. The invention comprises a substantially rectangular housing adapted to fit inside a standard electrical box with at least one outwardly open side. The assembly further comprises a multi-socket component having at least two adjacent socket surfaces comprising at least one socket opening on each of the two adjacent surfaces. The socket opening in the first and second surfaces are oriented so that the prongs of plugs simultaneously inserted into each of the two sockets do not intersect inside the multi-socket component. The multi-socket component is pivotally mounted to the housing so that in the closed position one of the two adjacent socket surfaces is exposed and the second adjacent socket surface is recessed inside the housing. In the pivoted open position of the invention, both the at least one socket opening on the first surface and the at least one socket opening on the second surface are both accessible. The assembly further comprises an assembly cover plate which is attached to multi-socket connector. The assembly cover plate is adapted to accept and be covered by a standard outlet cover plate.

The object of the invention as defined in appended claim 1 is to provide a recessed retractable electrical receptacle assembly with at least one exposed operable socket in the closed position capable of being opened to expose additional operable sockets.

Another object of the invention is to provide a recessed retractable electrical receptacle assembly which is adapted to fit into a standard electrical box which can increase the number of sockets in the same space.

A further object of the invention is to provide a recessed retractable electrical receptacle assembly which is adapted to comprise both electrical sockets and data communication ports in the same assembly. Another object of the invention is to provide a recessed retractable electrical receptacle assembly which is adapted to comprise sockets with either at least one ground fault circuit interrupter (GFCI) or Arc Fault Circuit Interrupter (AFCI).

Yet another object of the invention is to provide a recessed retractable electrical receptacle assembly which when installed maintains the appearance of a typical outlet.

A further object of the invention is to provide a recessed retractable electrical receptacle assembly which is adapted to be covered by a standard electrical outlet cover plate.

### BRIEF DESCRIPTION OF THE DRAWINGS

The invention will now be described with reference to the drawing in which:
FIG. 1 is an exploded perspective view of the components of the invention.
FIG. 2 is a perspective view showing the multi-socket connector of the invention articulated in the closed position.
FIG. 3 is a perspective view of the invention in the closed position.
FIG. 4 is a perspective view showing the multi-socket connector of the invention in the open position.
FIG. 5 is a perspective view of the invention in use in the open position.
FIG. 6 is a top plane view of the invention in the open position.
FIG 7 is a top plane view of the multi-socket connector of the invention.
FIG. 8 is a side plane view of the invention in the open position.
FIG. 9 is a front plane view of the invention.

### DETAILED DESCRIPTION OF THE PREFERRED EMBODIEMENT

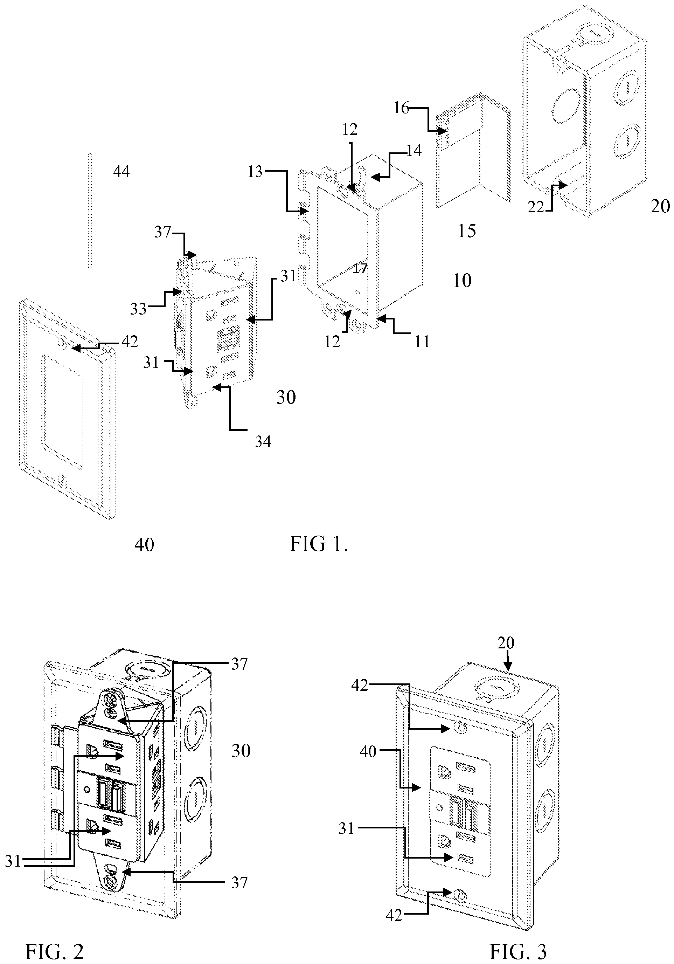

Referring to FIG. 1, the invention is shown in an exploded view. The invention comprises a housing 10 that prevents access to electrical wiring when installed in a standard electrical box 20 while also provides an open space for the multi-socket assembly component to move in and out, a multi-socket connector 30 which has sockets on two adjacent sides, a cover plate 40 and a means for pivoting the multi-socket connector between a closed position and an open position. The invention presented includes an outlet assembly that has accessible sockets when in the closed position, similar to a standard electrical outlet. When the invention is open, the design of the inventions presents additional sockets (standard electrical, USB, or other). The invention is designed and adapted to fit into a standard electrical box 20 making it retro-fittable to most residential or commercial applications.

The housing 10 is substantially a rectangular box with at least one open side 17 and sized and adapted to fit into a standard electrical box 20. The housing 10 includes a peripheral flange 11 on the open side 17 of the housing 10. The flange 11 may include one or more hinge barrels 13 on one side for connecting to the other components of the invention and for providing a pivoting means 18. The flanges may have one or more bore holes 12 which correspond to the bore holes 22 of a standard electrical box 20. The housing 10 can be connected to the standard electrical box by inserting a screw through the flange bore hole 12 and electrical box bore hole 22. The housing 10 also includes a least one opening through which the wires 14 of the invention pass through for connecting inside a standard electrical box 20. The housing 10 optionally includes a wire stabilizer 15 having a plurality of grooves 16 for holding the connecting wires in a fixed position thereby preventing movement of the connecting wires when installed in the electrical box 20. The wire stabilizer 15 may be a separate component as shown in FIG. 1 or integral to the interior or exterior of the housing 10.

The invention further provides a multi-socket connector 30 which is sized and adapted to fit into the housing 10. The multi-socket connector 30 is a substantially closed box containing standard electrical connector wiring for connecting electrical and data communication devise male end plugs. The multi-socket connector 30 has at least one socket opening 31 on each of two adjacent surfaces. Any number of multiple socket configurations can be imagined. The configuration shown in FIGS. 1- 9 has two GFCI sockets on the exposed surface and two USB sockets on the hidden surface adapted for use in a standard electrical single gang box 20. However, it is intended that the invention encompassed any connector type and includes any standard size electrical box.

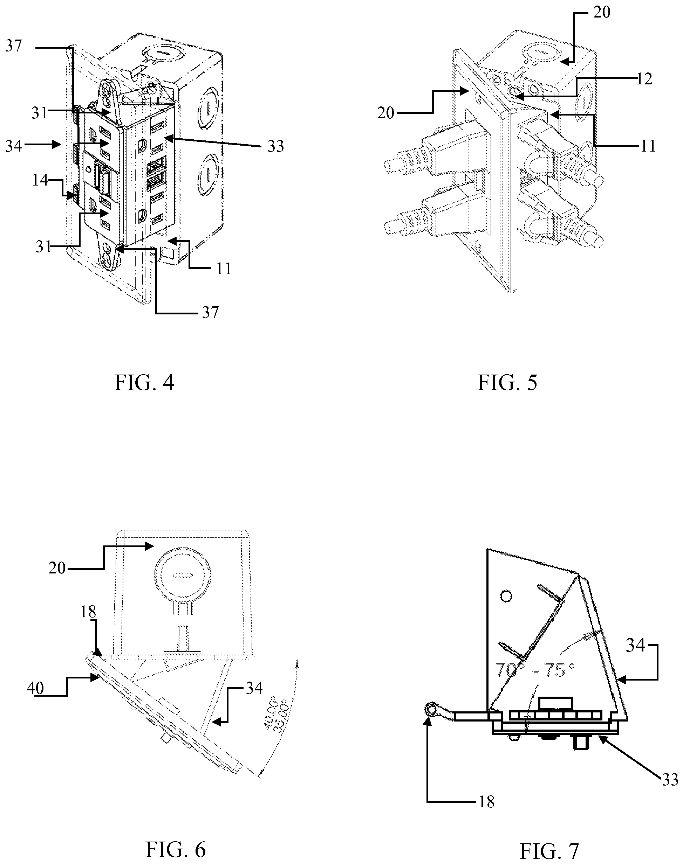

The multi-socket connector has a closed position surface 33 adjacent and substantially perpendicular to an open position surface 34. As can be seen in FIGS. 2 and 3 the sockets 31 on the closed position surface 33 are exposed and available for use in the closed position. FIGS 2 and 3 also show that the open position surface 34 is recessed inside the housing 10 in the closed position. As can be seen in FIGS. 4, 5 and 6, the multi-socket connector is adapted to pivotally open to expose the sockets 31 on the open position surface 34. FIG. 4, 5 and 6 show that both the sockets 31 on the open position surface 34 and sockets 31 on the closed position surface 33 are available for use only in the open position.

The multi-socket connector 30 is adapted so that the open socket surface 34 clears the housing 10 during the outward pivotal articulation between the closed position as shown in FIG. 2 and 3 and open position as shown in FIG. 4, 5 and 6. The relative angle between the closed surface 33 and the adjacent open surface 34 less than 90 degrees. The relative angle between the closed surface and the adjacent open surface is between 89 and 45 degrees. As shown in FIG. 7, the angle in the preferred embodiment is between 70 and 75 degrees. The appropriate angle must be selected to allow the multi-socket connector 30 to clear the housing 10. The angle optimally provides for the proper orientation of the sockets on the closed surface 33 and the adjacent open surface 34 such that the socket bore holes do not intersect inside the multi-socket connector 30 which would cause interference and arcing. The proper angle also allows the device plugs to lie flat against the closed surface 33 and open surface 34 as can best be seen in FIG 5. The sockets as shown in the FIGS. 1-9 are oriented horizontally which prevents intersection of the sockets bores inside the multi-socket connector 30.

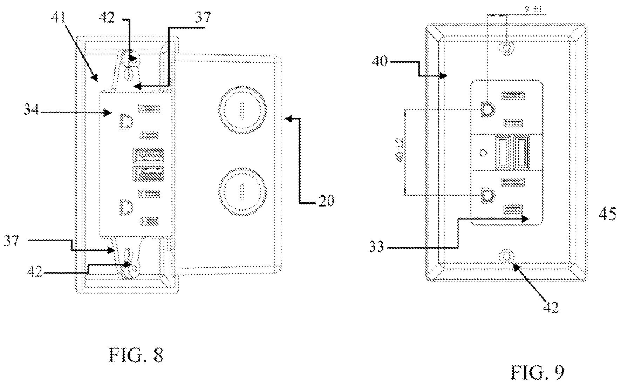

The multi-socket connector may optionally include at least one connection tab 37 for connecting the multi-socket connector 30 to the cover plate 40. The tab 37 of the multi-socket connector 30 may be connected to the cover plate 40 by any preferable connecting means such adhesive, screws, rivets and the like. As seen in FIG. 3 and 9, the cover plate 40 forms a substantially flush border around the exposed multi-socket connector closed surface 33 of the multi-socket connector 30 forming a framed multi-socket connector 45. FIG. 8 shows the multi-socket connector 30 attached to cover plate backside 41 by the tabs 37 in the open position of the invention. The framed multi-socket connector 45 optionally includes at least one bore hole 42 placed and adapted to accept a screw from a standard electrical outlet cover plate which can be installed over the cover plate 40. Preferably, the multi-socket connector 30 has at least one pivoting means 18 such as a barrel hinge as shown in the drawings 1, 2, 4 and 7 or any other appropriate pivoting mechanism along a peripheral edge. In the case of a barrel hinge, the hinge barrels of the multi-socket connectors 30 are capable of being lined up with the hinge barrels 13 of the housing 10 to form a continuous linear barrel for accepting a hinge pin 44 to create a hinge. The hinge connects the framed multi-socket connector 45 to the housing 10 and allows the framed multi-socket connector to pivot outwardly away from the housing 10 from the closed position to the open position.

It is also preferable that the relative angle between the housing 10 and the closed surface 33 is between 35 and 40 degrees as can be seen in FIG 6. However, the relative angle between the housing 10 and the closed surface 34 in the open position may be between 33 and 180 degrees.

The present invention is not intended to be limited to the embodiment described herein, but to encompass any and all embodiments within the scope of the following claims.

## Claims

1. A recessed retractable electrical receptacle assembly comprising:
a housing (10) adapted to fit inside a standard electrical box (20) recessed into a mounting surface;
a multi-socket connector (30) adapted to fit inside and connected to said housing (10), said multi-socket connector (30) comprising a closed position socket surface (33) and an open position socket surface (34) adjacent to said closed position socket surface (33), wherein the closed position socket surface (33) and open position socket surface (34) each comprise at least one electrical socket (31);
a cover plate (40) attached to said multi-socket connector (30), said cover plate (40) surrounding said closed position socket surface (33) forming a framed multi-socket connector (45);
a pivoting means (18) for articulating the framed multi-socket connector (30) outwardly away from said housing (10) between a closed position and an open position of the receptacle assembly, wherein
said open position socket surface (34) is recessed inside said housing (10) when in said closed position and said closed position socket surface (33) and open position socket surface (34) are exposed when in said open position,
**characterized in that** the relative angle between the closed position socket surface (33) and the open position socket surface (34) is between 45° and 89° such that, when rotated, the multi-socket connector (30) clears the housing (10).

2. A recessed retractable electrical receptacle assembly according to claim 1, where the relative angle between the closed position socket surface (33) and the open position socket surface (34) is between 70° and 75°.

## Patentansprüche

1. Eine zurückversetzte einziehbare elektrische Buchsenbaugruppe bestehend aus:
einem Gehäuse (10), das an einen Standard-Elektrokasten (20) angepasst ist, der in eine Montagefläche eingelassen ist;
einem Mehrfachsteckverbinder (30), der an das Gehäuse (10) angepasst ist und mit diesem verbunden ist, wobei dieser Steckverbinder (30) eine Steckdosenfläche mit geschlossener Position (33) und eine Steckdosenfläche mit offener Position (34) neben der Steckdosenfläche mit geschlossener Position (33) umfasst, von denen die Steckdosenfläche mit geschlossener Position (33) und die Steckdosenfläche mit offener Position (34) jeweils mindestens eine Steckdose (31) umfassen;
einer Abdeckplatte (40), die an dem Mehrfachsteckverbinder (30) befestigt ist, wobei die Abdeckplatte (40) die Sockelfläche in geschlossener Position (33) umgibt und einen gerahmten Multisteckverbinder (45) bildet;
einem schwenkbaren Mittel (18) zur Artikulation des gerahmten Mehrfachsteckverbinders (30) nach außen weg vom besagten Gehäuse (10) zwischen einer geschlossenen Position und einer offenen Position der Aufnahmebaugruppe, wobei
besagte Sockelfläche in offener Position (34) in das Gehäuse (10) vertieft ist, wenn in geschlossener Position die Sockelfläche in geschlossener Position (33) und die Sockelfläche in offener Position (34) freigelegt sind, wenn sie sich in offener Position befinden,
**dadurch gekennzeichnet, dass** der relative Winkel zwischen der Sockelfläche in geschlossener Position (33) und der Sockelfläche in offener Position (34) zwischen 45° und 89° liegt, so dass der Mehrfachsteckverbinder (30) das Gehäuse (10) freigibt, wenn er gedreht wird.

2. Eine zurückversetzte einziehbare elektrische Buchsenbaugruppe nach Anspruch 1, bei der der relative Winkel zwischen der Sockelfläche in geschlossener Position (33) und der Sockelfläche in offener Position (34) zwischen 70° und 75° liegt.

## Revendications

1. Une embase électrique escamotable encastrée équipée comprenant :
un boîtier (10) adapté pour recevoir une armoire électrique standard (20) encastré dans une surface de montage ;
un connecteur multiprise (30) adapté pour être installé dans ledit boîtier et connecté à celui-ci (10), ledit connecteur multiprise (30) comprenant une surface de prise en position fermée (33) et une surface de prise en position ouverte (34) adjacente à ladite surface de prise en position fermée (33), dans lequel la surface de prise en position fermée (33) et la surface de prise en position ouverte (34) comprennent chacune au moins une prise électrique (31) ;
une plaque de fermeture (40) fixée sur ledit connecteur multiprise (30), ladite plaque de fermeture (40) entourant ladite surface de prise en position fermée (33) formant un connecteur multiprise (45) inséré dans un châssis ;
un moyen pivotant (18) permettant d'articuler le connecteur multiprise (30) inséré dans le châssis vers l'extérieur dudit boîtier (10) entre une position fermée et une position ouverte de l'embase équipée, dans lequel
ladite surface de prise de position ouverte (34) est encastrée à l'intérieur dudit boîtier (10) lorsque ladite position fermée et ladite surface de prise de position fermée (33) et la surface de prise de position ouverte (34) sont exposées lorsque la structure se trouve en position ouverte,
**caractérisé en ce que** l'angle relatif entre la surface de la prise de position fermée (33) et la surface de la prise de position ouverte (34) est compris entre 45° et 89° de telle sorte que, lorsqu'il est tourné, le connecteur multiprise (30) laisse le boîtier (10) vide.

2. Une embase électrique rétractable encastrée équipée selon la revendication 1, où l'angle relatif entre la surface de prise de position fermée (33) et la surface de prise de position ouverte (34) est compris entre 70° et 75°.
